(19) Europäisches Patentamt
European Patent Office
Office européen des brevets

(11) **EP 1 496 299 B1**

# (12) FASCICULE DE BREVET EUROPEEN

(45) Date de publication et mention de la délivrance du brevet:
**03.05.2006 Bulletin 2006/18**

(51) Int Cl.:
***F16L 11/12*** *(2006.01)*

(21) Numéro de dépôt: **04291632.0**

(22) Date de dépôt: **29.06.2004**

(54) **Tube multicouche a base de polyamides pour le transport de fluides**

Mehrschichtrohr auf Basis von Polyamiden zum Flüssigkeitstransport

Polyamide based multilayer tube for transporting fluids

(84) Etats contractants désignés:
**AT BE BG CH CY CZ DE DK EE ES FI FR GB GR HU IE IT LI LU MC NL PL PT RO SE SI SK TR**

(30) Priorité: **08.07.2003 FR 0308315**

(43) Date de publication de la demande:
**12.01.2005 Bulletin 2005/02**

(73) Titulaire: **Arkema**
**92800 Puteaux (FR)**

(72) Inventeur: **Micheneau, Sébastien**
**92400 Courbevoie (FR)**

(74) Mandataire: **Neel, Henry et al**
**ARKEMA**
**Département Propriété Industrielle**
**4-8, cours Michelet,**
**La Défense 10**
**92091 Paris La Défense Cedex (FR)**

(56) Documents cités:
**EP-A- 1 036 967**
**EP-A- 1 243 831**
**EP-A- 1 314 758**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 496 299 B1

## Description

### *Domaine de l'invention*

La présente invention concerne des tubes à base de polyamides pour le transfert de fluide.

A titre d'exemple de tubes pour le transfert de fluide on peut citer les tubes pour l'essence, et en particulier pour amener l'essence du réservoir jusqu'au moteur des automobiles. A titre d'autres exemples de transfert de fluide on peut citer les fluides mis en oeuvre dans la fuel cell (pile à combustible), le système à CO2 pour le refroidissement et l'air conditionné, les systèmes hydrauliques, le circuit de refroidissement, l'air conditionné et les transferts de puissance à moyenne pression.

Pour des raisons de sécurité et de préservation de l'environnement les constructeurs d'automobiles imposent à ces tubes à la fois des caractéristiques mécaniques comme la résistance à l'éclatement et la flexibilité avec une bonne tenue aux chocs à froid (-40°C) ainsi qu'à température élevée (125°C), et également une très faible perméabilité aux hydrocarbures et à leurs additifs, en particulier les alcools comme le méthanol et l'éthanol. Ces tubes doivent aussi avoir une bonne tenue aux carburants et aux huiles de lubrification du moteur. Ces tubes sont fabriqués par coextrusion des différentes couches selon les techniques habituelles des thermoplastiques.

L'invention est particulièrement utile pour transporter l'essence.

### *L'art antérieur et le problème technique*

Parmi les caractéristiques du cahier des charges des tubes d'essence, cinq sont particulièrement difficiles à obtenir conjointement de façon simple :

- tenue aux chocs à froid (-40°C), le tube ne se brise pas,
- tenue aux carburants
- tenue à température élevée (125°C),
- très faible perméabilité à l'essence,
- une bonne stabilité dimensionnelle du tube en utilisation avec de l'essence.

Dans les tubes multicouches de structures diverses, la tenue aux chocs à froid reste imprévisible avant d'avoir réalisé les tests normés de résistance aux chocs à froid.

Par ailleurs, il est déjà connu de la demande de brevet EP 0781799 que dans les véhicules automobiles, sous l'effet de la pompe à injection, l'essence circule à grande vitesse dans les canalisations reliant le moteur au réservoir. Dans certains cas, le frottement essence / paroi interne du tube peut générer des charges électrostatiques, dont l'accumulation peut conduire à une décharge électrique (étincelle) capable d'enflammer l'essence avec des conséquences catastrophiques (explosion). Aussi, est-il nécessaire de limiter la résistivité superficielle de la face interne du tube à une valeur en général inférieure à $10^6$ ohms. Il est connu d'abaisser la résistivité superficielle de résines ou matériaux polymériques en leur incorporant des matériaux conducteurs et/ou semiconducteurs tels que le noir de carbone, les nanotubes de carbone, les fibres en acier, les fibres de carbone, les particules (fibres, plaquettes, sphères) métallisées avec de l'or, de l'argent ou du nickel.

Parmi ces matériaux, le noir de carbone est plus particulièrement employé, pour des raisons économiques et de facilité de mise en oeuvre. En dehors de ses propriétés électroconductrices particulières, le noir de carbone se comporte comme une charge telle que par exemple le talc, la craie, le kaolin. Ainsi, l'homme de l'art sait que lorsque le taux de charge augmente, la viscosité du mélange polymère / charge augmente. De même, lorsque le taux de charge augmente, le module de flexion du polymère chargé augmente. Ces phénomènes connus et prévisibles sont explicités dans "Handbook of Fillers and Reinforcements for Plastics" édité par H.S. Katz et J.V. Milewski - Van Nostrand Reinhold Company - ISBN 0-442-25372-9, voir en particulier le chapitre 2, section II pour les charges en général et le chapitre 16, Section VI pour le noir de carbone en particulier.

Quant aux propriétés électriques du noir de carbone, le bulletin technique "Ketjenblack EC - BLACK 94/01" de la société AKZO NOBEL indique que la résistivité de la formulation chute très brutalement lorsque un taux critique de noir de carbone, appelé seuil de percolation, est atteint. Lorsque le taux de noir de carbone augmente encore, la résistivité diminue rapidement jusqu'à atteindre un niveau stable (zone de plateau). On préfère donc, pour une résine donnée, opérer dans la zone de plateau, où une erreur de dosage n'aura qu'une faible influence sur la résistivité du compound.

On connait aussi de la demande de brevet EP 0 731 308 des tubes à base de polyamides et d'EVOH pour le transport d'essence. Ces tubes peuvent avoir une structure à 4 couches comprenant respectivement une couche extérieure de PA 12, une couche de liant qui est une polyoléfine greffée, une couche d'EVOH et une couche intérieure en contact avec l'essence comprenant un mélange de polyamide et de polyoléfine à matrice polyamide.

Le brevet EP 428833 décrit un tube à 3 couches comprenant respectivement une couche extérieure de PA 12, une couche de liant qui est une polyoléfine greffée et une couche intérieure d'EVOH en contact avec l'essence.

Les brevets EP 428834 et EP 470606 décrivent un tube à 5 couches comprenant respectivement une couche extérieure de PA 12, une couche de liant qui est une polyoléfine greffée, une couche de PA 6, une couche d'EVOH et une couche intérieure en PA 6 en contact avec l'essence.

Le brevet US 5038833 décrit un tube à 3 couches comprenant respectivement une couche extérieure de PA 12, une couche d'EVOH et une couche intérieure

en PA 12 en contact avec l'essence.

Tous ces tubes ont de bonnes propriétés mais l'épaisseur des couches de liant n'est pas facile à controler et il peut en resulter des délaminations. Dans le tube décrit dans US 5038833 il n'y a pas de liant mais il se produit des délaminations.

Le brevet EP 1243831 décrit un tube pour le transfert de fluides et en particulier de l'essence. Il comprend respectivement une couche extérieure en polyamide, une couche de liant en copolyamide, une couche d'EVOH, une autre couche de liant en copolyamide et une couche intérieure en polyamide en contact avec l'essence.

On a maintenant trouvé qu'en remplaçant, dans le tube précédent, la couche d'EVOH par une couche en mélange de polyamide et de polyoléfine à matrice polyamide on améliorait la tenue mécanique du tube. Ceci est particulièrement intéressant si la couche intérieure contient un conducteur pour la rendre antistatique. En effet on sait qu'une couche contenant une charge telle qu'un noir de carbone est plus rigide et résiste moins bien au choc que la même couche ne contenant pas cette charge. Le remplacement de l'EVOH par un mélange de polyamide et de polyoléfine à matrice polyamide permet d'améliorer la tenue au choc. Cependant selon la nature du fluide transporté ce tube peut être moins barrière que celui décrit dans EP 1243831.

### *Brève description de l'invention*

La présente invention concerne un tube multicouche comprenant dans sa direction radiale de l'extérieur vers l'intérieur :

- une couche extérieure (1) en polyamide choisi parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12,
- une couche de liant,
- une couche (2) en mélange de polyamide (A) et de polyoléfine (B) à matrice polyamide,
- une couche de liant,
- une couche intérieure (3) en polyamide choisie parmi les mêmes produits que la couche extérieure et pouvant être identique ou différente,
- les couches étant successives et adhérant entre-elles dans leur zone de contact respective.

Selon une forme de l'invention la couche intérieure contient un matériau électroconducteur produisant une résistivité surfacique inférieure à $10^6$ Ω.

Selon une autre forme de l'invention la couche intérieure (3) ne contient essentiellement pas de matériau électroconducteur et le tube comprend une couche (3a) adhérant à la couche (3), cette couche est en polyamide et contient un matériau électroconducteur produisant une résistivité surfacique inférieure à $10^6$ Ω.

Ces tubes peuvent avoir un diamètre extérieur de 6 à 110 mm et une une épaisseur de l'ordre de 0,5 à 5mm.

Avantageusement, le tube d'essence selon l'invention a un diamètre extérieur allant de 6 à 12 mm, une épaisseur totale de 0,22 mm à 2,5 mm,
une épaisseur de 50 à 700 μm pour la couche extérieure (1),
une épaisseur de 10 à 150 μm pour les couches de liant,
une épaisseur de 50 à 1000 μm pour la couche en mélange de polyamide et de polyoléfine à matrice polyamide,,
une épaisseur de 50 à 500 μm pour la couche intérieure (3) ou pour l'ensemble des couches (3) et (3a).

Le tube de la présente invention est très peu perméable à l'essence particulièrement aux hydrocarbures et à leurs additifs, en particulier les alcools comme le méthanol et l'éthanol ou encore les éthers comme le MTBE ou l'ETBE. Ces tubes ont aussi une bonne tenue aux carburants et aux huiles de lubrification du moteur.

Ce tube présente de très bonnes propriétés mécaniques à basse ou à haute température.

Le tube de l'invention peut comprendre une couche supplémentaire constituée de chutes de fabrication ou de tubes de l'invention présentant des défauts, ces chutes ou ces tubes sont broyés puis fondus et coextrudés avec les autres couches. Cette couche peut se situer entre la couche extérieure et la couche de liant.

L'invention concerne aussi l'utilisation de ces tubes pour le transport d'essence.

### *Description détaillée de l'invention*

**S'agissant de la couche extérieure** les polyamides ont avantageusement une masse moléculaire moyenne en nombre $\overline{Mn}$ en général supérieure ou égale à 12000 et avantageusement comprise entre 15000 et 50000. Leur masse moléculaire moyenne en poids $\overline{Mw}$ est en général supérieure à 24000 et avantageusement comprise entre 30000 et 100000. Leur viscosité inhérente (mesurée à 20°C pour un échantillon de 5.10-3 g par cm3 de méta-crésol) est en général supérieure à 0,9.

A titre d'exemple de polyamides aliphatiques résultant de la condensation d'une diamine aliphatique ayant de 6 à 12 atomes de carbone et d'un diacide aliphatique ayant de 9 à 12 atomes de carbone on peut citer :

le PA 6-12 résultant de la condensation de l'hexaméthylène diamine et de l'acide 1,12-dodecanedioïque,

le PA 9-12 résultant de la condensation de la diamine

en C9 et de l'acide 1,12-dodecanedioïque,
le PA 10-10 résultant de la condensation de la diamine en C10 et de l'acide 1,10-decanedioïque,
le PA 10-12 résultant de la condensation de la diamine en C10 et de l'acide 1,12-dodecanedioïque.

Quant aux copolyamides 11/12 ayant soit plus de 90% de motifs 11 soit plus de 90% de motifs 12, ils résultent de la condensation de l'acide amino 1-undecanoïque avec le lauryllactame (ou l'alpha omega amino acide en C12).

Avantageusement le polyamide contient un catalyseur organique ou minéral qu'on a ajouté au cours de la polycondensation. De préférence c'est de l'acide phosphorique ou hypophosphorique. La quantité de catalyseur peut être jusqu'à 3000 ppm par rapport à la quantité de polyamide et avantageusement entre 50 et 1000 ppm.

On ne sortirait pas du cadre de l'invention en utilisant un mélange de polyamides.

Avantageusement le polyamide est le PA 11 ou le PA 12.

Le polyamide peut être plastifié. S'agissant du plastifiant il est choisi parmi les dérivés de benzène sulfonamide, tels que le n-butyl benzène sulfonamide (BBSA), l'éthyl toluène sulfonamide ou le N-cyclohexyl toluène sulfonamide; les esters d'acides hydroxy-benzoïques, tels que le parahydroxybenzoate d'éthyl-2 hexyle et le parahydroxybenzoate de décyl-2 hexyle ; les esters ou éthers du tétrahydrofurfuryl alcool, comme l'oligoéthylèneoxytétrahydrofurfurylalcool ; les esters de l'acide citrique ou de l'acide hydroxy-malonique, tels que l'oligoéthylèneoxy malonate; et les copolymères comprenant des blocs polyamides et des blocs polyéthers. Un plastifiant particulièrement préféré est le n-butyl benzène sulfonamide (BBSA).

Les copolymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant, dans ce cas particulier, des polyétheresteramides. On utilise avantageusement ces copolymères.

Les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne.

Les séquences polyamides à bouts de chaînes diamines proviennent, par exemple, de la condensation d'acides alpha-oméga aminocarboxyliques, de lactames ou de diacides carboxyliques et diamines en présence d'une diamine limiteur de chaîne.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

La masse molaire en nombre $\overline{Mn}$ des séquences polyamides est comprise entre 300 et 15 000 et de préférence entre 600 et 5 000. La masse $\overline{Mn}$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le rapport de la quantité de copolymère à blocs polyamide et blocs polyether sur la quantité de polyamide est, en poids, compris avantageusement entre 10 / 90 et 60/40. On peut citer par exemple le copolymère à blocs PA 6 et blocs PTMG et le copolymère à blocs PA 12 et blocs PTMG.

De préférence, on utilise le polyamide 12. Avantageusement, le polyamide de la couche extérieure est plastifié par des plastifiants usuels tels que le n-butyl benzène sulfonamide (BBSA) et les copolymères comprenant des blocs polyamides et des blocs polyéthers.

On ne sortirait pas du cadre de l'invention en

utilisant un mélange de plastifiants. Le plastifiant peut être introduit dans le polyamide pendant la polycondensation ou ultérieurement. La proportion de plastifiant peut être de 0 à 30 % en poids pour respectivement 100 à 70 % de polyamide et avantageusement 5 à 20%.

**S'agissant du liant** on désigne ainsi tout produit qui permet l'adhésion des couches le liant peut être une polyoléfine fonctionnalisée portant par exemple une fonction acide carboxylique ou anhydride d'acide carboxylique. Elle peut être mélangée avec une polyoléfine non fonctionnalisée. Le liant peut être aussi un copolyamide.

Pour simplifier on a décrit plus loin des polyoléfines fonctionnalisées (B1) et des polyoléfines non fonctionnalisées (B2).

**A titre de premier exemple de liant** on peut citer les mélanges comprenant :

- 5 à 30 parties d'un polymère (D) lui-même comprenant un mélange d'un polyéthylène (D1) de densité comprise entre 0,910 et 0,940 et d'un polymère (D2) choisi parmi les élastomères, les polyéthylènes de très basse densité et les polyéthylènes métallocènes, le mélange (D1) + (D2) étant cogreffé par un acide carboxylique insaturé,
- 95 à 70 parties d'un polyéthylène (E) de densité comprise entre 0,910 et 0,930,
- le mélange de (D) et (E) étant tel que :

  - sa densité est comprise entre 0,910 et 0,930,
  - la teneur en acide carboxylique insaturé greffé est comprise entre 30 et 10000 ppm,
  - le MFI (ASTM D 1238 - 190°C - 2,16 kg) est compris entre 0,1 et 3 g / 10 min Le MFI désigne l'indice d'écoulement à l'état fondu.

La densité du liant est avantageusement comprise entre 0,915 et 0,920. Avantageusement (D1) et (E) sont des LLDPE , de préférence ils ont le même comonomere. Ce comonomère peut être choisi parmi est le 1-héxène, le 1-octène et le 1-butène. L'acide carboxylique insaturé peut être remplacé par un anhydride d'acide carboxylique insaturé.

**A titre de deuxième exemple de liant** on peut citer les mélanges comprenant:

- 5 à 30 parties d'un polymère (F) lui-même comprenant un mélange d'un polyéthylène (F1) de densité comprise entre 0,935 et 0,980 et d'un polymère (F2) choisi parmi les élastomères, les polyéthylènes de très basse densité et les copolymères de l'éthylène, le mélange (F1) + (F2) étant cogreffé par un acide carboxylique insaturé,
- 95 à 70 parties d'un polyéthylène (G) de densité comprise entre 0,930 et 0,950,
- le mélange de (F) et (G) étant tel que :

  - sa densité est comprise entre 0,930 et 0,950 et avantageusement entre 0,930 et 0,940,
  - la teneur en acide carboxylique insaturé greffé est comprise entre 30 et 10000 ppm,
  - le MFI (indice d'écoulement à l'état fondu) mesuré selon ASTM D 1238 à 190°C - 21,6 kg est compris entre 5 et 100.

L'acide carboxylique insaturé peut être remplacé par un anhydride d'acide carboxylique insaturé.

**A titre de troisième exemple de liant** on peut citer les mélanges constitués d'un polyéthylène de type HDPE, LLDPE, VLDPE ou LDPE, 5 à 35 % d'un polyéthylène métallocène greffé (par un acide carboxylique insaturé ou un anhydride d'acide carboxylique insaturé) et 0 à 35 % d'un élastomère, le total étant 100%.

**A titre de quatrième exemple de liant** on peut citer les mélanges comprenant :

- 5 à 35 parties d'un polymère (S) lui-même constitué d'un mélange de 80 à 20 parties d'un polyéthylène métallocène (S1) de densité comprise entre 0,865 et 0,915 et de 20 à 80 parties d'un polyéthylène LLDPE (S2) non métallocène, le mélange (S1) + (S2) étant cogreffé par un acide carboxylique insaturé,
- 95 à 65 parties d'un polyéthylène (T) choisi parmi les polyéthylènes homo ou copolymères et les élastomères,
- le mélange de (S) et (T) étant tel que :

- la teneur en acide carboxylique insaturé greffé est comprise entre 30 et 100000 ppm,
- le MFI (ASTM D 1238 - 190°C - 2,16 kg) est compris entre 0,1 et 10 g / 10 min. Le MFI désigne l'indice d'écoulement à l'état fondu et s'exprime en grammes par 10 minutes.

L'acide carboxylique insaturé peut être remplacé par un anhydride d'acide carboxylique insaturé.

**S'agissant du liant en copolyamide,** les copolyamides utilisables dans la présente invention ont une température de fusion (Norme DIN 53736B) comprise entre 60 et 200°C et leur viscosité relative en solution peut être comprise entre 1,3 et 2,2 (Norme DIN 53727, solvant m-crésol, concentration 0,5 g/100 ml, température 25°C, viscosimètre Ubbelohde). Leur rhéologie à l'état fondu est de préférence proche de celle des matériaux de la couche extérieure et de la couche intérieure.

Les copolyamides proviennent, par exemple, de la condensation d'acides alpha-oméga aminocarboxyliques de lactames ou de diacides carboxyliques et diamines.

**Selon un premier type** les copolyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne pouvant être par exemple une

monoamine ou une diamine ou un monoacide carboxylique ou un diacide carboxylique. Parmi les limiteurs de chaîne on peut citer notamment l'acide adipique, l'acide azélaïque, l'acide stéarique, la dodecanediamine. Les copolyamides de ce premier type peuvent comprendre aussi des motifs qui sont des restes de diamines et diacides carboxyliques.

A titre d'exemple d'acide dicarboxylique on peut citer l'acide adipique, l'acide nonanedioïque, l'acide sébacique et l'acide dodécanédioïque.

A titre d'exemple d'acide alpha oméga aminocarboxylique on peut citer l'acide aminocaproïque, l'acide aminoundécanoïque et l'acide aminododécanoïque.

A titre d'exemple de lactame on peut citer le caprolactame et le laurolactame (2-Azacyclotridéoenone).

**Selon un deuxième type** les copolyamides résultent de la condensation d'au moins un acide alpha-oméga aminocarboxylique (ou un lactame), au moins une diamine et au moins un diacide carboxylique. L'acide alpha oméga aminocarboxylique, le lactame et le diacide carboxylique peuvent être choisis parmi ceux cités plus haut.

La diamine peut être une diamine aliphatique branchée, linéaire ou cyclique ou encore arylique.

A titre d'exemples on peut citer l'hexaméthylènediamine, la pipérazine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

Les procédésde fabrication des copolyamides sont connus de l'art antérieur et ces copolyamides peuvent être fabriqués par polycondensation, par exemple en autoclave.

**Selon un troisième type les copolyamides** sont un mélange d'un copolyamide 6/12 riche en 6 et d'un copolyamide 6/12 riche en 12. S'agissant du mélange de copolyamides 6/12 l'un comprenant en poids plus de 6 que de 12 et l'autre plus de 12 que de 6, le copolyamide 6/12 résulte de la condensation du caprolactame avec le lauryllactame. Il est clair que "6" désigne les motifs dérivésdu caprolactame et "12" désigne les motifs dérivésdu lauryllactame. On ne sortirait pas du cadre de l'invention si le caprolactame étaitremplacéen tout ou partie par l'acide aminocaproïque , de même pour le lauryllactame qui peut être remplacé par l'acide aminododecanoïque. Ces copolyamides peuvent comprendre d'autres motifs pourvu que les rapports des proportions de 6 et de 12 soient respectées.

Avantageusement le copolyamide riche en 6 comprend 60 à 90% en poids de 6 pour respectivement 40 à 10% de 12.

Avantageusement le copolyamide riche en 12 comprend 60 à 90% en poids de 1 2 pour respectivement 40 à 10% de 6.

Quant aux proportions du copolyamide riche en 6 et du copolyamide riche en 12 elles peuvent être, en poids, de 40/60 à 60/40 et de préférence 50/50.

Ces mélanges de copolyamides peuvent aussi comprendre jusqu'à 30 parties en poids d'autres (co)polyamides ou de polyoléfines greffées pour 100 parties des copolyamides riches en 6 et riches en 12.

Ces copolyamides ont une température de fusion (Norme DIN 53736B) comprise entre 60 et 200°C et leur viscosité relative en solution peut être comprise entre 1,3 et 2,2 (Norme DIN 53727, solvant m-crésol, concentration 0,5 g/100 ml, température 25°C, viscosimètre Ubbelohde). Leur rhéologie à l'état fondu est de préférence proche de celle des matériaux des couches adjacentes. Ces produits se fabriquent par les techniques habituelles des polyamides. Des procédés sont décrits dans les brevets US 4424864, US 4483975, US 4774139, US 5459230, US 5489667, US 5750232 et US 5254641.

**S'agissant de la couche (2) en mélange de polyamide (A) et de polyoléfine (B) à matrice polyamide, et d'abord des polyamides** on entend par polyamide les produits de condensation :

- d'un ou plusieurs aminoacides, tels les acides aminocaproïques, amino-7-heptanoïque, amino-11-undécanoïque et amino-12-dodécanoïque ou d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique.

A titre d'exemple de polyamide on peut citer le PA 6, le PA 6-6 le PA 11 et le PA 12.

On peut aussi utiliser avantageusement des copolyamides. On peut citer les copolyamides résultant de la condensation d'au moins deux acides alpha oméga aminocarboxyliques ou de deux lactames ou d'un lactame et d'un acide alpha oméga aminocarboxylique. On peut encore citer les copolyamides résultant de la condensation d'au moins un acide alpha oméga aminocarboxylique (ou un lactame), au moins une diamine et au moins un acide dicarboxylique.

A titre d'exemple de lactames on peut citer ceux ayant de 3 à 12 atomes de carbone sur le cycle principal et pouvant être substitués. On peut citer par exemple le $\beta,\beta$-diméthylpropriolactame, le $\alpha,\alpha$-diméthylpropriolactame, l'amylolactame, le caprolactame, le capryllactame et le lauryllactame.

A titre d'exemple d'acide alpha oméga aminocarboxylique on peut citer l'acide amino-undécanoïque et l'acide aminododécanoïque. A titre d'exemple d'acide dicarboxylique on peut citer l'acide adipique, l'acide sébacique, l'acide isophtalique, l'acide butanedioïque, l'acide 1,4 cyclohexyldicarboxylique, l'acide téréphtalique, le sel de sodium ou de lithium de l'acide sulphoisophtalique,

les acides gras dimérisés(ces acides gras dimérisés ont une teneur en dimère d'au moins 98% et sont de préférence hydrogénés) et l'acide dodécanédioïque HOOC-$(CH_2)_{10}$-COOH.

La diamine peut être une diamine aliphatique ayant de 6 à 12 atomes de carbone, elle peut être arylique et/ou cyclique saturée. A titre d'exemples on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine

(MPDM), la bis(aminocyclohéxyl) méthane (BACM), la bis(3-méthyl-4 aminocyclohéxyl) méthane (BMACM).

A titre d'exemples de copolyamides on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azélaïque et d'hexaméthylène diamine (PA 6/6-9/11/12), des copolymères de caprolactame, de lauryle lactame, d'acide amino 11 undécanoïque, d'acide adipique et d'hexaméthylène diamine (PA 6/6-6/11/12), des copolymères de lauryle lactame, d'acide azélaïque et d'hexaméthylène diamine (PA 6-9/12).

Avantageusement le copolyamide est choisi parmi le PA 6/12 et le PA 6 / 6-6.

On peut utiliser des mélanges de polyamide. Avantageusement la viscosité relative des polyamides, mesurée en solution à 1% dans l'acide sulfurique à 20°C, est comprise entre 1,5 et 5.

Avantageusement le polyamide (A) est choisi parmi le PA 6, le coPA 6/6-6 et le coPA 6/12 et de préférence parmi le PA 6 et le coPA 6/6-6.

**Quant à la polyoléfine du mélange de polyamide et de polyoléfine** elle peut être fonctionnalisée ou non fonctionnalisée ou être un mélange d'au moins une fonctionnalisée et/ou d'au moins une non fonctionnalisée. Pour simplifier on a désigné la polyoléfine par (B) et on a décrit ci dessous des polyoléfines fonctionnalisées (B1) et des polyoléfines non fonctionnalisées (B2).

Une polyoléfine non fonctionnalisée (B2) est classiquement un homo polymère ou copolymère d'alpha oléfines ou de dioléfines, telles que par exemple, éthylène, propylène, butène-1, octène-1, butadiène. A titre d'exemple, on peut citer :

- les homo polymères et copolymères du polyéthylène, en particulier LDPE, HDPE, LLDPE(linear low density polyéthylène, ou polyéthylène basse densité lineaire), VLDPE(very low density polyéthylène, ou polyéthylène très basse densité) et le polyéthylène métallocène .
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrènelisoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle (EVA), la proportion de comonomère pouvant atteindre 40% en poids.

La polyoléfine fonctionnalisée (B1) peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes (B2) greffées ou co-ou ter polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant cogreffé avec un anhydride, notamment anhydride maléique, selon un taux de greffage par exemple de 0,01 à 5% en poids.

La polyoléfine fonctionnalisée (B1) peut être choisie parmi les (co)polymères suivants, greffés avec anhydride maléique ou méthacrylate de glycidyle, dans lesquels le taux de greffage est par exemple de 0,01 à 5% en poids :

- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;

- des copolymères éthylène et acétate de vinyle (EVA) et (méth)acrylate d'alkyle, contenant jusqu'à 40% en poids de comonomères .

La polyoléfine fonctionnalisée (B1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle. A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :

- les copolymères éthylène/(méth)acrylate d'alkyle / acide (méth)acrylique ou anhydride maléique ou méthacrylate de glycidyle;
- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (B1) ou (B2) désigne les méthacrylates et les acrylates d'alkyle en C1 à C8, et peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Par ailleurs, les polyoléfines précitées (B1) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci ou les mélanges d'au moins deux polyoléfines fonctionnalisées pouvant réagir entre elles.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans un large mesure, ce que l'homme de l'art appréciera. MFI, abréviation de Melt Flow Index, est l'indice de fluidité à l'état fondu. On le mesure selon la norme ASTM 1238.

Avantageusement les polyoléfines (B2) non fonctionnalisées sont choisies parmi les homopolymères ou copolymères du polypropylène et tout homo polymère de l'éthylène ou copolymère de l'éthylène et d'un comonomère de type alpha oléfinique supérieur tel que le butène, l'hexène, l'octène ou le 4-méthyl 1-Pentène. On peut citer par exemple les PP, les PE de haute densité, PE de moyenne densité, PE basse densité linéaire, PE basse densité, PE de très basse densité. Ces polyéthylènes sont connus par l'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader® de la Demanderesse ou des polyoléfines greffées par de l'anhydride maléique comme les Orevac® de la Demanderesse ainsi que des ter polymères de l'éthylène, d'acrylate d'alkyle et d'acide (meth) acrylique. On peut citer aussi les homopolymères ou copolymères du polypropylène greffés par un anhydride d'acide carboxylique puis condensés avec des polyamides ou des oligomères mono aminés de polyamide.

Le MFI du polyamide, les MFI de (B1) et (B2) peuvent être choisis dans une large plage il est cependant recommandé pour faciliter la dispersion de (B) que le MFI du polyamide soit plus grand que celui de (B).

Pour de faibles proportions de (B), par exemple 10 à 15 parties, il est suffisant d'utiliser une polyoléfine (B2) non fonctionnalisée. La proportion de (B2) et (B1) dans la phase (B) dépend de la quantité de fonctions présentes dans (B1) ainsi que de leur réactivité. Avantageusement on utilise des rapports en poids (B1)/(B2) allant de 5/35 à 15/25. On peut aussi n'utiliser qu'un mélange de polyoléfines (B1) pour obtenir une réticulation.

**Selon une première forme préférée du mélange de polyamide et de polyoléfine** la polyoléfine (B) comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé ou un anhydride d'acide carboxylique insaturé.

Selon une variante de cette première forme de l'invention la polyoléfine (B) comprend (i) un polyéthylène haute densité (HDPE), (ii) un polymère (C2) choisi parmi les élastomères, les polyéthylènes de très basse densité et les copolymères de l'éthylène (C2) étant greffé par un acide carboxylique insaturé ou un anhydride d'acide carboxylique insaturé et éventuellement (iii) un polymère (C'2) choisi parmi les élastomères, les polyéthylènes de

très basse densité et les copolymères de l'éthylène.

**Selon une deuxième forme préférée du mélange de polyamide et de polyoléfine** la polyoléfine (B) comprend (i) du polypropylène et (ii) une polyoléfine qui résulte de la réaction d'un polyamide (C4) avec un copolymère (C3) comprenant du propylène et un monomère insaturé X, greffé ou copolymérisé.

**Selon une troisième forme préférée du mélange de polyamide et de polyoléfine** la polyoléfine (B) comprend (i) un polyéthylène de type EVA, LLDPE , VLDPE ou metallocene et (ii) un copolymère éthylène -(meth)acrylate d'alkyle -anhydride maléique.

**Selon une quatrième forme préférée du mélange de polyamide et de polyoléfine** la polyoléfine comprend deux polymères fonctionnalisés comprenant au moins 50 % en moles de motifs éthylène et pouvant réagir pour former une phase réticulée. Selon une variante le polyamide (A) est choisi parmi les mélanges de (i) polyamide et (ii) copolymère à blocs PA 6 et blocs PTMG et les mélanges de (i) polyamide et (ii) copolymère à blocs PA 12 et blocs PTMG; le rapport des quantités de copolymère et de polyamide en poids étant compris entre 10/90 et 60/40.

**S'agissant de la première forme** les proportions sont avantageusement les suivantes (en poids) :

60 à 70 % de polyamide,
5 à 15 % du mélange de (C1) et (C2) cogreffé
le complément en polyéthylène haute densité.

S'agissant du polyéthylène haute densité sa densité est avantageusement comprise entre 0,940 et 0,965 et le MFI entre 0.1 et 5 g/10 min. (190°C 2,16 kg).

Le polyéthylène (C1) peut être choisi parmi les polyéthylènes cités plus haut. Avantageusement (C1) est un polyéthylène haute densité (HDPE) de densité comprise entre 0,940 à 0,965. Le MFI de (C1) est (sous 2,16 kg - 190°C) entre 0,1 et 3 g/10 min.

Le copolymère (C2) peut être par exemple un élastomère éthylène / propylène (EPR) ou éthylène / propylène / diène (EPDM). (C2) peut être aussi un polyéthylène de très basse densité (VLDPE) qui est soit un homopolymère de l'éthylène, soit un copolymère de l'éthylène et d'une alpha oléfine. (C2) peut aussi être un copolymère de l'éthylène avec au moins un produit choisi parmi (i)

les acides carboxyliques insaturés, leurs sels, leurs esters, (ii) les esters vinyliques d'acides carboxyliques saturés (iii) les acides dicarboxyliques insaturés, leurs sels, leurs esters, leurs hemiesters, leurs anhydrides. Avantageusement (C2) est un EPR.

Avantageusement on utilise 60 à 95 parties de (C1) pour 40 à 5 parties de (C2).

Le mélange de (C1) et (C2) est greffé avec un acide carboxylique insaturé c'est-à-dire (C1) et (C2) sont cogreffés. On ne sortirait pas du cadre de l'invention en utilisant un dérivé fonctionnel de cet acide. Des exemples d'acide carboxylique insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés. Ces monomères de greffage comprennent par exemple les acides maléique, fumarique, itaconique, citraconique, allylsuccinique, cyclohex-4-ène-1,2-dicarboxylique, 4-méthylcyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique.

Divers procédés connus peuvent être utilisés pour greffer un monomère de greffage sur le mélange de (C1) et (C2). Par exemple, ceci peut être réalisé en chauffant les polymères (C1) et (C2) à température élevée, environ 150° à environ 300°C, en présence ou en l'absence d'un solvant avec ou sans générateur de radicaux.

Dans le mélange de (C1) et (C2) modifié par greffage obtenu de la façon susmentionnée, la quantité du monomère de greffage peut être choisie d'une façon appropriée mais elle est de préférence de 0,01 à 10 %, mieux de 600 ppm à 2 % par rapport au poids de (C1) et (C2) greffés. La quantité du monomère greffé est déterminée par dosage des fonctions succiniques par spectroscopie IRTF. Le MFI de (C1) et (C2) ayant été cogreffés est de 5 à 30 g/10 min. (190°C - 2,16 kg) de préférence 13 à 20.

Avantageusement le mélange de (C1) et (C2) cogreffés, est tel que le rapport $MFI_{10}$ / $MFI_2$ est supérieur à 18,5, $MFI_{10}$ désignant l'indice d'écoulement à 190°C sous une charge de 10 kg et $MFI_2$ l'indice sous une charge de 2,16 kg. Avantageusement le $MFI_{20}$ du mélange des polymères (C1) et (C2) cogreffés est inférieur à 24. $MFI_{20}$ désigne l'indice d'écoulement à 190°C sous une charge de 21,6 kg.

S'agissant de la variante de la première forme les proportions sont avantageusement les suivantes (en poids) :

60 à 70 % de polyamide,
5 à 25% (avantageusement 15 à 25%) de (C2) greffé,
0 à 10% de (C'2)
le complément en polyéthylène haute densité.

(C2) est avantageusement un EPR ou un EPDM, (C'2) est avantageusement un EPR contenant en poids 70 à 75% d'éthylène.

**S'agissant de la deuxième forme** les proportions sont avantageusement les suivantes (en poids) :

60 à 70 % de polyamide,
20 à 30 % de polypropylène
3 à 10 % d'une polyoléfine qui résulte de la réactiond'un polyamide (C4) avec un copolymère (C3) comprenant du propylène et un monomère insaturé X, greffé a copolymérisé.

Le MFI du polypropylène est avantageusement inférieur à 0,5 g/10 min (230°C - 2,16 kg) et de préférence compris entre 0,1 et 0,5. De tels produits sont décrits dans EP 647681.

On décrit maintenant le produit greffé de cette deuxième forme de l'invention. On commence par préparer (C3) qui est soit un copolymère du propylène et d'un monomère insaturé X, soit un polypropylène sur lequel on greffe un monomère insaturé X. X est tout monomère insaturé pouvant être copolymérisé avec le propylène ou greffé sur le polypropylène et possédant une fonction pouvant réagir avec un polyamide. Cette fonction peut être par exemple un acide carboxylique, un anhydride d'acide dicarboxylique ou un epoxyde. A titre d'exemple de monomère X on peut citer l'acide (méth) acrylique, l'anhydride maléique et les epoxydes insaturés tels que le (méth)acrylate de glycidyle. On utilise avantageusement l'anhydride maléique. S'agissant des polypropylènes greffés on peut greffer X sur des polypropylènes homo ou copolymères, tels que des copolymères éthylène propylène majoritaires en propylène (en moles). Avantageusement (C3) est tel que X est greffé. Le greffage est une opération connue en soi.

(C4) est un polyamide ou un oligomère de polyamide. Des oligomères de polyamide sont décrits dans EP 342066 et FR 2291225. Les polyamides (ou oligomères) (C4) sont les produits de condensation des monomères déjà cités plus haut. On peut utiliser des mélanges de polyamides. On utilise avantageusement le PA-6, le PA-11, le PA 12, le copolyamide à motifs 6 et motifs 12 (PA-6/12), et le copolyamide à base de caprolactame, hexaméthylènediamine et acide adipique (PA-6/6.6). Les polyamides ou oligomères (C4) peuvent être à terminaisons acides, amine ou monoamine. Pour que le polyamide ait une terminaison monoamine il suffit d'utiliser un limiteur de chaîne de formule

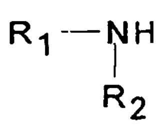

dans laquelle :

$R_1$ est l'hydrogène ou un groupement alkyle linéaire ou ramifié contenant jusqu'à 20 atomes de carbone,
$R_2$ est un groupement ayant jusqu'à 20 atomes de carbone alkyle ou alcenyle linéaire ou ramifié, un radical cycloaliphatique saturé ou non, un radical aromatique ou une combinaison des précédents. Le limiteur peut être par exemple la laurylamine ou l'oleylamine.

Avantageusement (C4) est un PA-6, un PA-11 ou un PA-12. La proportion de C4 dans C3 + C4 en poids est avantageusement comprise entre 0,1 et 60 %. La réaction de (C3) avec (C4) s'effectue de préférence à l'état fondu. On peut par exemple malaxer (C3) et (C4) dans une extrudeuse à une température généralement comprise entre 230 et 250°C. Le temps de séjour moyen de la matière fondue dans l'extrudeuse peut être compris entre 10 secondes et 3 minutes et de préférence entre 1 et 2 minutes.

**S'agissant de la troisième forme** les proportions sont avantageusement les suivantes (en poids) :

60 à 70 % de polyamide,
5 à 15 % d'un copolymère éthylène -(meth)acrylate d'alkyle -anhydride maléique.
le complément est un polyéthylène de type EVA, LLDPE , VLDPE ou metallocene; avantageusement la densitédu polyethylene LLDPE, VLDPE ou métallocene est comprise entre 0,870 et 0,925, et le MFI est compris entre 0,1 et 5 (190°C - 216 kg).

Avantageusement les copolymères éthylène - (méth)acrylate d'alkyle

- anhydride maléique comprennent de 0,2 à 10 % en poids d'anhydride maléique, jusqu'à 40 % et de préféreoe 5 à 40 % en poids de (méth)acrylate d'alkyle. Leur MFI est compris entre 2 et 100 (190°C - 2,16 kg). Les (méth)acrylates d'alkyle ont déjà été décrits plus haut. La température de fusion est comprise entre 80 et 120°C. Ces copolymères sont disponibles dans le commerce. Ils sont produits par polymérisation radicalaire à une pression pouvant été comprise entre 200 et 2500 bars.

**S'agissant de la quatrième forme** les proportions sont avantageusement les suivantes (en poids) :

40 à 95 % de polyamide,
60 à 5 % d'un mélange d'un copolymère éthylène -(meth)acrylate d'alkyle -anhydride maléique et d'un copolymère éthylène -(meth)acrylate d'alkyle -methacrylate de glycidyle.

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth) acrylate d'alkyle. Leur MFI est compris entre 2 et 100 (190°C - 2,16 kg). Les (méth)acrylates d'alkyle ont déjà été décrits plus haut. La température de fusion est comprise entre 80 et 120°C. Ces copolymères sont disponibles dans le commerce. Ils sont produits par polymérisation radicalaire à une pression pouvant être comprise entre 200 et 2500 bars.

Le copolymère éthylène/(méth)acrylate d'alkyle/ methacrylate de glycidyle peut contenir jusqu'à 40% en poids de (méth)acrylate d'alkyle, avantageusement de 5 à 40 % et jusqu'à 10% en poids d'époxyde insaturé, de préférence 0,1 à 8%.

Avantageusement le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle. La quantité de (méth)acrylate d'alkyle est de préférence de 20 à 35%. Le MFI est avantageusement compris entre 5 et 100 (en g/10 min à 190°C sous 2,16 kg), la température de fusion est comprise entre 60 et 110°C. Ce copolymère peut être obtenu par polymérisation radicalaire des monomères.

On peut ajouter des catalyseurs pour accélérer la réaction entre les fonctions époxy et anhydride, parmi les composés capables d'accélérer la réaction entre la fonction epoxy et la fonction anhydride on peut citer notamment :

- des amines tertiaires telles que la diméthyllaurylamine, la diméthylstéarylamine, la N-butylmorpholine, la N,N-diméthylcyclohexylamine, la benzyldiméthylamine, la pyridine, la diméthylamino-4-pyridine, le méthyl-1-imidazole, la tétraméthyléthylhydrazine, la N,N-diméthylpipérazine, la N,N,N',N'-tétraméthyl-1,6-hexanediamine, un mélange d'amines tertiaires ayant de 16 à 18 carbones et connues sous l'appellation de diméthylsuifamine,
- des phosphines tertiaires telles que la triphénylphosphine
- des alkyldithiocarbamates de zinc.
- des acides.

On ne sortirait pas du cadre de l'invention si une partie du copolymère éthylène-(meth)acrylate d'alkyle-anhydride maleique est remplacée par un copolymère éthylène-acide acrylique ou un copolymère éthylène -anhydride maleique l'anhydride maleique ayant été en tout ou partie hydrolysé. Ces copolymères peuvent aussi comprendre un (meth)acrylate d'alkyle. cette partie peut representer jusqu'à 30% du copolymère éthylène-(meth) acrylate d'alkyle-anhydride maleique.

Avantageusement la couche (2) en mélange de polyamide (A) et de polyoléfine (B) à matrice polyamide est selon la première forme, c'est à dire celle dans laquelle il y a du PEHD. Avantageusement le polyamide est le PA 6 ou le PA 6/6-6 et de préférence le PA 6.

**S'agissant de la couche intérieure,** en polyamide il peut être choisi parmi les polyamides cités pour la couche extérieure. Ce polyamide peut, comme celui de la couche extérieure, être plastifié par des plastifiants usuels tels que le n-butyl benzène sulfonamide (BBSA) et les copolymères comprenant des blocs polyamides et des blocs polyéthers. Avantageusement on utilise le PA 12 ou le PA 11. Selon une forme particuliere le polyamide de cette couche intérieure n'est pas plastifié.

Selon une forme de l'invention la couche intérieure contient un matériau électroconducteur produisant une résistivité surfacique inférieure à $10^6$ Ω.

On peut citer à titre d'exemple d'electroconducteur les métaux, les oxydes métalliqueset les produits à base de carbone. A titre d'exemple de produits à base de carbone on peut citer le graphite, les agrégatsde noir de carbone, les fibres de carbone, les nanotubes de carbone et les charbons actifs. On ne sortirait pas du cadre de l'invention en utilisant plusieurs élérents

S'agissant du noir de carbone la proportion est habituellement comprise entre 5 et 30 parties en poids de noir pour 100 parties de l'ensemble du polyamide et de ses plastifiants et autres additifs.

Selon une autre forme de l'invention la couche intérieure (3) ne contient essentiellement pas de matériau électroconducteur et le tube comprend une couche (3a) adhérant à la couche (3), cette couche est en polyamide et contient un matériau électroconducteur produisant une résistivité surfacique inférieure à $10^6$ Ω.

Le polyamide de cette couche (3a) peut être choisi parmi les polyamides utilisables dans la couche intérieure. Il peut être identique ou différent du polyamide de la couche intérieure. Il peut aussi être choisi parmi les polyamides de la matrice de la couche (2).

Ces tubes multicouches peuvent être cylindriques de diamètre constant ou annelés.

De manière classique, ces tubes peuvent comporter des gaines de protection notamment en caoutchouc pour les protéger des points chauds du moteur.

## Revendications

1. Tube multicouche comprenant dans sa direction radiale de l'extérieur vers l'intérieur :

    • une couche extérieure (1) en polyamide choisi parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12,
    • une couche de liant,
    • une couche (2) en mélange de polyamide (A) et de polyoléfine (B) à matrice polyamide,
    • une couche de liant,
    • une couche intérieure (3) en polyamide choisie parmi les mêmes produits que la couche extérieure et pouvant être identique ou différente,
    • les couches étant successives et adhérant entre-elles dans leur zone de contact respective.

2. Tube selon la revendication 1 dans lequel le polyamide de la couche extérieure est du PA 11 ou du PA 12.

**3.** Tube selon la revendication 1 ou 2 dans lequel le polyamide de la couche extérieure contient un plastifiant.

**4.** Tube selon l'une quelconque des revendications précédentes dans lequel le liant est choisi parmi les polyoléfines fonctionnalisées, les mélanges d'une polyoléfine fonctionnalisée avec une polyoléfine non fonctionnalisée et les copolyamides.

**5.** Tube selon la revendication 4 dans lequel les copolyamides sont un mélange d'un copolyamide 6/12 riche en 6 et d'un copolyamide 6/12 riche en 12.

**6.** Tube selon l'une quelconque des revendications précédentes dans lequel la polyoléfine (B) de la couche (2) comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé ou un anhydride d'acide carboxylique insaturé.

**7.** Tube selon la revendication 6 dans lequel les proportions sont les suivantes (en poids) :

- 60 à 70 % de polyamide,
- 5 à 15 % du mélange de (C1) et (C2) cogreffé
- le complément en polyéthylène haute densité .

**8.** Tube selon l'une quelconque des revendications 1 à 5 dans lequel la polyoléfine (B) de la couche (2) comprend (i) un polyéthylène haute densité (HDPE), (ii) un polymère (C2) choisi parmi les élastomères, les polyéthylènes de très basse densité et les copolymères de l'éthylène (C2) étant greffé par un acide carboxylique insaturé ou un anhydride d'acide carboxylique insaturé et éventuellement (iii) un polymère (C'2) choisi parmi les élastomères, les polyéthylènes de très basse densité et les copolymères de l'éthylène.

**9.** Tube selon la revendication 8 dans lequel les proportions sont les suivantes (en poids) :

- 60 à 70 % de polyamide,
- 5 à 25% (avantageusement 15 à 25%) de (C2) greffé,
- 0 à 10 % de (C'2),
- le complément en polyéthylène haute densité .

**10.** Tube selon l'une quelconque des revendications précédentes dans lequel le polyamide de la couche (2) est choisi parmi le PA 6 et le PA 6/6-6.

**11.** Tube selon l'une quelconque des revendications précédentes dans lequel le polyamide de la couche intérieure est choisi parmi le PA 11 et le PA 12.

**12.** Tube selon l'une quelconque des revendications précédentes dans lequel la couche intérieure contient un matériau électroconducteur produisant une résistivité surfacique inférieure à $10^6$ Ω.

**13.** Tube selon l'une quelconque des revendications précédentes dans lequel la couche intérieure (3) ne contient essentiellement pas de matériau électroconducteur et le tube comprend une couche (3a) adhérant à la couche (3), cette couche est en polyamide et contient un matériau électroconducteur produisant une résistivité surfacique inférieure à $10^6$ Ω.

**14.** Tubes selon l'une quelconque des revendications précédentes et qui sont annelés.

**15.** Utilisation des tubes selon l'une quelconque des revendications précédentes pour le transport d'essence.

**Patentansprüche**

**1.** Mehrschichtrohr, das in seiner radialen Richtung von außen nach innen Folgendes umfasst:

- eine Außenschicht (1) aus einem Polyamid, das ausgewählt ist aus PA 11, PA 12, aliphatischen Polyamiden, die aus der Kondensation eines aliphatischen Diamins mit 6 bis 12 Kohlenstoffatomen und einer aliphatischen zweiwertigen Säure mit 9 bis 12 Kohlenstoffatomen hervorgehen, und 11/12-Copolyamiden mit entweder mehr als 90 % der 11-Einheiten oder mehr als 90 % der 12-Einheiten,
- eine Bindemittelschicht,
- eine Schicht (2) aus einer Mischung aus einem Polyamid (A) und einem Polyolefin (B) mit Polyamidmatrix,
- eine Bindemittelschicht,
- eine Innenschicht (3) aus einem Polyamid, das aus denselben Produkten wie die Außenschicht ausgewählt ist und völlig gleich oder anders sein kann,
- wobei die Schichten aufeinander folgen und in ihrem jeweiligen Kontaktbereich aneinander haften.

**2.** Rohr nach Anspruch 1, wobei das Polyamid der Außenschicht PA 11 oder PA 12 ist.

**3.** Rohr nach Anspruch 1 oder 2, wobei das Polyamid der Außenschicht einen Weichmacher enthält.

4. Rohr nach einem der vorhergehenden Ansprüche, wobei das Bindemittel ausgewählt ist aus funktionalisierten Polyolefinen, Gemischen aus einem funktionalisierten Polyolefin und einem nicht funktionalisierten Polyolefin, und Copolyamiden.

5. Rohr nach Anspruch 4, wobei die Copolyamide ein Gemisch aus einem Copolyamid 6/12 sind, das viel 6 enthält, und einem Copolyamid 6/12, das viel 12 enthält.

6. Rohr nach einem der vorhergehenden Ansprüche, wobei das Polyolefin (B) der Schicht (2) (i) ein Polyethylen hoher Dichte (HDPE) und (ii) ein Gemisch aus einem Polyethylen (C1) und einem Polymer (C2) umfasst, das aus Elastomeren, Polyethylenen sehr niedriger Dichte und Ethylen-Copolymeren ausgewählt ist, wobei das Gemisch aus (C1) + (C2) durch eine ungesättigte Carbonsäure oder ein Anhydrid einer ungesättigten Carbonsäure aufgepfropft ist.

7. Rohr nach Anspruch 6, wobei die Verhältnisse (nach Masse) folgende sind:

- 60 bis 70 % Polyamid,
- 5 bis 15 % des aufgepfropften Gemischs aus (C1) und (C2)
- die Differenz Polyethylen hoher Dichte.

8. Rohr nach einem der Ansprüche 1 bis 5, wobei das Polyolefin (B) der Schicht (2) (i) ein Polyethylen hoher Dichte (HDPE), (ii) ein Polymer (C2), das aus Elastomeren, Polyethylenen sehr niedriger Dichte und Ethylen-Copolymeren ausgewählt ist, wobei (C2) durch eine ungesättigte Carbonsäure oder ein Anhydrid einer ungesättigten Carbonsäure aufgepfropft ist, und möglicherweise (iii) ein Polymer (C'2) umfasst, das aus Elastomeren, Polyethylenen sehr niedriger Dichte und Ethylen-Copolymeren ausgewählt ist.

9. Rohr nach Anspruch 8, wobei die Verhältnisse (nach Masse) folgende sind:

- 60 bis 70 % Polyamid,
- 5 bis 25 % (vorteilhafterweise 15 bis 25 %) aufgepfropftes (C2),
- 0 bis 10 % (C'2),
- die Differenz Polyethylen hoher Dichte.

10. Rohr nach einem der vorhergehenden Ansprüche, wobei das Polyamid der Schicht (2) aus PA 6 und PA 6/6-6 ausgewählt ist.

11. Rohr nach einem der vorhergehenden Ansprüche, wobei das Polyamid der Innenschicht aus PA 11 und PA 12 ausgewählt ist.

12. Rohr nach einem der vorhergehenden Ansprüche, wobei die Innenschicht ein elektrisch leitendes Material enthält, das einen spezifischen Oberflächenwiderstand von unter $10^6\ \Omega$ erzeugt.

13. Rohr nach einem der vorhergehenden Ansprüche, wobei die Innenschicht (3) im Wesentlichen kein elektrisch leitendes Material enthält und das Rohr eine Schicht (3a) aufweist, die an der Schicht (3) haftet, wobei diese Schicht aus einem Polyamid besteht und ein elektrisch leitendes Material enthält, das einen spezifischen Oberflächenwiderstand von unter $10^6\ \Omega$ erzeugt.

14. Rohre nach einem der vorhergehenden Ansprüche, die geringelt sind.

15. Verwendung der Rohre nach einem der vorhergehenden Ansprüche für die Beförderung von Benzin.

**Claims**

1. Multilayer tube comprising, in its radial direction from the outside inwards:

- an outer layer (1) made of a polyamide chosen from PA-11, PA-12, aliphatic polyamides resulting from the condensation of an aliphatic diamine having from 6 to 12 carbon atoms and of an aliphatic diacide having from 9 to 12 carbon atoms, and 11/12 copolyamides having either more than 90% of 11 units or more than 90% of 12 units;
- a tie layer;
- a layer (2) made of a polyamide (A)/polyolefin (B) blend (2) having a polyamide matrix;
- a tie layer;
- an inner layer (3) made of a polyamide that is chosen from the same products as the outer layer and may be identical or different;
- the layers being successive and adhering to one another in their respective contact zones.

2. Tube according to Claim 1, in which the polyamide of the outer layer is PA-11 or PA-12.

3. Tube according to Claim 1 or 2, in which the polyamide of the outer layer contains a plasticizer.

4. Tube according to any one of the preceding claims, in which the tie is chosen from functionalized polyolefins, blends of a functionalized polyolefin with an unfunctionalized polyolefin, and copolyamides.

5. Tube according to Claim 4, in which the copolyamides are a blend of a 6-rich copolyamide 6/12 and of a 12/rich copolyamide 6/12.

6. Tube according to any one of the preceding claims, in which the polyolefin (B) of the layer (2) comprises

(i) a high-density polyethylene (HDPE) and (ii) a blend of a polyethylene (C1) and a polymer (C2) chosen from elastomers, very low-density polyethylenes and ethylene copolymers, the (C1) + (C2) blend being cografted with an unsaturated carboxylic acid or an unsaturated carboxylic acid anhydride.

7. Tube according to Claim 6, in which the proportions (by weight) are the following:

- 60 to 70% of polyamide,
- 5 to 15% of the cografter blend of (C1) and (C2),
- the balance being high-density polyethylene.

8. Tube according to any one of Claims 1 to 5, in which the polyolefin (B) of the layer (2) comprises (i) a high-density polythelene (HDPE), (ii) a polymere (C2) chosen from elastomers, very low-density polyethylenes and ethylene copolymers, (C2) being grafted with an unsaturated carboxylic acid or an unsaturated carboxylic acid anhydride and, optionally, (iii) a polymer (C'2) chosen from elastomers, very low-density polyethylenes and ethylene copolymers.

9. Tube according to Claim 8, in which the proportions (by weight) are the following:

- 60 to 70% of polyamide,
- 5 to 25% (advantageously 15 to 25%) of grafted (C2),
- 0 to 10% of (C'2),
- the balance being high-density polyethylene.

10. Tube according to any one of the preceding claims, in which the polyamide of the layer (2) is chosen from PA-6 and PA-6/6,6.

11. Tube according to any one of the preceding claims, in which the polyamide of the inner layer is chosen from PA-11 and PA-12.

12. Tube according to any one of the preceding claims, in which the inner layer contains an electrically conducting material, producing a surface resistivity of less than $10^6\ \Omega$.

13. Tube according to any one of the preceding claims, in which the inner layer (3) contains essentially no electrically conducting material and the tube includes a layer (3a) that adheres to the layer (3), this layer is made of a polyamide and contains an electrically conducting material producing a surface resistivity of less than $10^6\ \Omega$.

14. Tubes according to any one of the preceding claims and which are annulate.

15. Use of the tubes according to any one of the preceding claims for transporting petrol.